# EUROPÄISCHE PATENTSCHRIFT

(11) **EP 3 090 188 B1**
(45) Veröffentlichungstag und Bekanntmachung des Hinweises auf die Patenterteilung: **18.11.2020**
(21) Anmeldenummer: 15704495.9
(22) Anmeldetag: 04.02.2015
(51) Int. Cl.: F16B 19/08, F16B 5/04

(54) **STANZNIET**
SELF-PIERCING RIVET
RIVET AUTO-PERCEUR

(30) Priorität: 04.02.2014 DE 102014201976
(43) Veröffentlichungstag der Anmeldung: 09.11.2016
(73) Patentinhaber: Böllhoff Verbindungstechnik GmbH, 33649 Bielefeld (DE)
(72) Erfinder: HEGER, Mathias, 33813 Oerlinghausen (DE); HENKE, Dennis, 33378 Rheda-Wiedenbruck (DE)
(74) Vertreter: HWP Intellectual Property
(86) Internationale Anmeldenummer: PCT/EP2015/052331
(87) Internationale Veröffentlichungsnummer: WO 2015/118027

(56) Entgegenhaltungen:
- EP-A1- 2 631 022
- EP-A2- 2 314 890
- WO-A1-2011/023616
- DE-B3-102006 028 537
- KATO T ET AL: "Plastic joining of dissimilar material of high tensile strength steel and aluminium alloy sheets", WELDING INTERNATIONAL, TAYLOR & FRANCIS, ABINGDON, GB, Bd. 22, Nr. 9, 1. September 2008 (2008-09-01), Seiten 575-581, XP001570847, ISSN: 0950-7116, DOI: 10.1080/09507110802410361 [gefunden am 2008-10-07]

## Beschreibung

### 1. Gebiet der Erfindung

Die vorliegende Erfindung betrifft einen Stanzniet, insbesondere einen Halbhohlstanzniet, zur Herstellung einer Fügeverbindung zwischen mindestens zwei Bauteilen, insbesondere zur Herstellung einer Fügeverbindung zwischen einem Bauteil aus hochfestem Stahl und einem Bauteil aus einem dickwandigen Aluminiumblech oder aus Aluminiumguss, sowie ein Verfahren dafür.

### 2. Hintergrund der Erfindung

Das Stanznieten als Fügeverfahren findet in der Industrie breite Anwendung. Gerade in der Automobilherstellung werden immer neue Anforderungen an Stanznietverbindungen gestellt. Dies liegt vor allem daran, dass die Fügeaufgabe in Abhängigkeit von den miteinander zu verbindenden Materialien, wie bspw. Stahl, hochfester Stahl, Magnesiumbleche, Kunststoff, CFK und ähnliche Materialien, immer wieder neu gelöst werden müssen. Zudem stellt die Verkürzung der Taktzeit beim Herstellen einer Fügeverbindung, die Zugänglichkeit zu den miteinander zu verbindenden Bauteilen und der für die Verbindung zur Verfügung stehende Raum immer neue Anforderungen im Rahmen einer Fügeaufgabe.

So realisiert bspw. die spezielle Kopfgeometrie des Stanzniets gemäß EP 1 950 432 A1 einen Korrosionsschutz für die hergestellte Stanznietverbindung. Der Stanzniet ist aber aufgrund vielfältiger Probleme beim Setzvorgang für heute weit verbreitete hochfeste Materialien, wie Stahl und Aluminiumlegierungen, nicht geeignet. Es ist unter anderem nicht möglich, eine gewünschte Verbindungsfestigkeit hinreichend sicher zu erzeugen.

DE 10 2006 028 537 B3 offenbart einen Stanzniet, der zum Fügen von Fügeteilen aus höherfesten Stählen, insbesondere AHSS-Stähle sowie metastabile austenitische Stähle, geeignet ist. Der Nietfuß dieses Stanzniets zeichnet sich durch eine kleine radiale Schaftaußenfläche und eine größere radiale Schaftinnenfläche aus, die tangential in einander übergehen. Aufgrund dieser Gestaltung des Nietfußes wird das Tragverhalten der hergestellten Stanznietverbindungen verbessert. Sobald jedoch der Stanzniet innerhalb einer Verbindung in einer unteren Lage in Bauteile gesetzt wird, die nicht aus höherfesten Stählen bestehen, sinkt die Verbindungsqualität.

EP 1 387 093 A1 offenbart eine Stanznietgeometrie, die aus Aluminium oder einer Aluminiumlegierung hergestellt ist. Sowohl das Material des Stanzniets als auch seine Geometrie sind im Speziellen an die Herstellung von Stanznietverbindungen in Aluminiumblechen und nicht an ein Durchstanzen von Blechlagen aus hochfestem Stahl angepasst.

Die Stanznietgeometrie aus DE 10 2005 020 416 A1 und EP 1 229 254 B1 ist ebenfalls auf das Herstellen einer Fügeverbindung in hochfesten Materialien abgestimmt. Es hat sich gezeigt, dass ein herkömmlicher Halbhohlstanzniet aus Stahl mit einem angespitzten Nietfuß für die Verbindungen von Blechen aus hoch- und höchstfestem Stahl ungeeignet ist. Denn aufgrund der hohen Festigkeit der Fügeteile tritt der Umformvorgang des Nietschafts unerwünscht früh ein, sodass unter Umständen ein Durchstanzen des oberen Fügeteils nicht möglich ist. Um diesen Nachteilen zu begegnen, wurde ein vergleichsweise gedrungener und kompakter Halbhohlstanzniet mit einer geringen Schafthohlraumlänge entwickelt, der einen stumpf ausgebildeten Nietfuß aufweist. Zudem nimmt beginnend am Nietfuß die radiale Breite des Nietschafts in Richtung des Nietkopfs deutlich zu, um eine ausreichende Stabilität des Stanzniets zu realisieren. Außerdem ist eine sehr hohe Niethärte erforderlich, so dass in der Verbindung hohe Eigenspannungen und damit eine hohe Rissgefahr vorhanden sind.

In EP 2 024 651 B1 ist ein Stanzniet offenbart, der gerade zum Stanzen in hochfesten Stählen eine ausreichende axiale Stabilität aufweist. Zu diesem Zweck weist der Nietschaft einen Außendurchmesser von 5,5 mm und einen Innendurchmesser von 2,9 mm auf. Der Nietfuß ist durch eine plane Schaftstirnfläche stumpf ausgebildet. Um die Stabilität des Nietschafts aufgrund seiner radialen Breite zu unterstützen, geht die Schaftstirnfläche radial einwärts konisch in die Schaftbohrung des Stanzniets über. Gerade die Kombination dieser Merkmale realisiert die ausreichende Stabilität zum Herstellen einer Fügeverbindung in Blechen aus hochfestem Stahl. Aber auch hier werden in der Verbindung aufgrund der Nietform hohe Eigenspannungen erzeugt. Diese führen insbesondere in der Materialverbindung von hochfestem Stahlblech mit darunter angeordnetem Aluminiumblech zu einer erhöhten Rissgefahr und damit verbundener erhöhter Versagenswahrscheinlichkeit.

DE 10 2005 052 360 A1 offenbart ebenfalls einen Stanzniet zum Herstellen einer Fügeverbindung in hochfesten Stahlblechen. Im Gegensatz zu WO 2007/132194 A1 ist hier der Nietschaft weniger stabil ausgebildet. Denn der offenbarte Stanzniet weist einen Außendurchmesser des Nietschafts von 5,3 mm und einen Innendurchmesser des Nietschafts von 3,4 mm auf. Trotz der geringeren radialen Breite des Nietschafts weist der Stanzniet eine ausreichende axiale Stabilität auf, die durch die spezielle Schneidgeometrie am Nietfuß erzielt wird. Der Nietfuß wird dazu nämlich aus einer planen oder leicht geneigten Schaftstirnfläche gebildet, die radial auswärts durch eine kleinere konische Schneidkante und radial einwärts durch eine größere konisch verlaufende Schaftinnenfase begrenzt ist.

Die oben beschriebenen Geometrien von Stanznieten sind an die Fügeverbindungen in hochfesten Bauteilen oder Aluminiumbauteilen angepasst. Derartige Stanzniete liefern jedoch keine befriedigenden Ergebnisse, wenn eine Fügeverbindung in Bauteilen unterschiedlicher Materialien mit einer hochfesten Decklage hergestellt werden soll.

Eine Matrize für eine selbststanzende Nietbefestigungsvorrichtung ist in EP 2 631 022 A1 beschrieben. Die Nietbefestigungsvorrichtung umfasst einen Stempel zum Antreiben eines selbststanzenden Niets mit einem Kopfabschnitt mit großem Durchmesser und hohlen Beinabschnitten, die sich vom Kopfabschnitt erstrecken, in eine Vielzahl von befestigten Elementen, die auf der Matrize angeordnet sind. In der oberen Oberfläche der Matrize befindet sich ein Hohlraum zur Aufnahme von Bereichen der befestigten Elemente, die hervorstehen, nachdem der selbststanzende Niet durch den Stempel in die Elemente eingetrieben wurde. Der Hohlraum ist relativ zur Mittelachse des Hohlraums axialsymmetrisch und hat im mittleren Abschnitt eine runde konkave Oberfläche, eine konvexe Oberfläche, die die runde konkave Oberfläche umgibt, und eine konkave Oberfläche im äußeren Umfangsabschnitt, die die konvexe Oberfläche umgibt. Die Matrize kann Elemente aus einem Material mit einer geringen Formbarkeit befestigen.

Der vorliegenden Erfindung liegt daher die Aufgabe zugrunde, einen Stanzniet zum Fügen von Bauteilen bereitzustellen, der gerade auch zum Herstellen einer Fügeverbindung in einem Bauteilverbund mit einer hochfesten Decklage zufriedenstellende Ergebnisse liefert.

### 3. Zusammenfassung der Erfindung

Die obige Aufgabe wird durch den im unabhängigen Patentanspruch 1 definierten Stanzniet, durch ein Fügeverfahren für diesen Stanzniet in eine hochfeste Decklage und ein darunter liegendes Aluminiumteil gemäß Patentanspruch 9 sowie durch eine Fügeverbindung gemäß Patentanspruch 12 gelöst. Vorteilhafte Ausgestaltungen und Weiterentwicklungen dieses Stanzniets ergeben sich aus der folgenden Beschreibung, der begleitenden Zeichnung sowie den anhängenden Patentansprüchen.

Der erfindungsgemäße Stanzniet zur Herstellung einer Fügeverbindung zwischen mindestens zwei Bauteilen weist die folgenden Merkmale auf: einen Nietkopf und einen Nietschaft mit einer zentralen Schaftbohrung, die vorzugsweise bezüglich einer zentralen Achse rotationssymmetrisch ausgebildet sind, wobei der Nietkopf eine Oberseite mit einem vorgegebenen Kopfdurchmesser umfasst. Der Nietschaft umfasst eine zylindrische Schaftaußenfläche und eine die zentrale Schaftbohrung begrenzende Schaftinnenfläche, wobei die Schaftaußenfläche und die Schaftinnenfläche an dem vom Nietkopf abgewandten axialen Ende des Nietschafts durch eine plane Schaftstirnfläche und einen Schaftendradius verbunden sind. Der Schaftendradius geht tangential in die Schaftinnenfläche über und die plane Schaftstirnfläche ist mit der Schaftaußenfläche durch eine Schneidkante verbunden, wobei ein Verhältnis von maximaler radialer Breite bₘ des Nietschafts zur radialen Stirnflächenbreite bₛ im Bereich von 1,5 ≤ bₘ/bₛ ≤ 2,5 liegt. Es ist ebenfalls bevorzugt, den Stanzniet bezüglich seiner zentralen Achse nicht rotationssymmetrisch, sondern oval, elliptisch oder anderweitig geformt auszubilden.

Der erfindungsgemäß ausgebildete Stanzniet zeichnet sich durch seine spezielle Geometrie im Nietschaftbereich in Kombination mit dem Nietfußbereich aus. Denn aufgrund der speziellen Geometrie des Nietschafts wird dem Stanzniet eine ausreichende axiale Stabilität zum Durchstanzen einer hochfesten Decklage gegeben. Gleichzeitig liefert die Gestaltung des Nietfußes eine ausreichend stumpfe Geometrie zum Durchdringen der hochfesten Decklage mit einer ausreichend spitzen Geometrie zum Eindringen in eine verglichen zur hochfesten Decklage weicheren weiteren Materiallage. Des Weiteren wird mithilfe der radialen Verbreiterung des Nietschafts beginnend am Nietfußbereich in Richtung des Nietkopfs dafür gesorgt, dass sich der Nietschaft beim Herstellen der Fügeverbindung ausreichend radial aufspreizt, sodass gleichzeitig der aus dem hochfesten Material gestanzte Butzen die Herstellung der Fügeverbindung weniger behindert. Gleichzeitig wird der Nietschaft dabei vorzugsweise nicht soweit aufgespreizt, dass eine übermäßige Aufstauchung des Niets durch einen vom Bauteil erzeugten Eindringwiderstand erfolgt. Somit werden die guten Fügeeigenschaften des erfindungsgemäßen Stanzniets gerade durch die sich in axialer Richtung verändernde radiale Breite des Nietschafts und durch die Nietfußgeometrie bestehend aus planer Schaftstirnfläche und radial einwärts verlaufender kreisbogenförmiger Verbindungsfläche zur Schaftinnenfläche erzielt.

Erfindungsgemäß ist der Schaftendradius mindestens doppelt so groß wie die maximale radiale Breite bₘ des Nietschafts. Diese geometrische Ausgestaltung stellt sicher, dass die Schaftstirnfläche mit einem ausreichend großen Kreisbogen mit der Schaftinnenfläche verbunden ist. Auf diese Weise entsteht ein fließender stetiger Übergang von der Schaftstirnfläche in das Innere des Nietschafts, der gerade das Zusammenwirken zwischen dem Stanzniet und dem herausgestanzten Stanzbutzen positiv beeinflusst.

Gemäß einer weiteren bevorzugten Ausführungsform vorliegender Erfindung weist der Nietkopf einen Kopfaußenrand auf, der mit der Schaftaußenfläche durch eine konische Unterkopffase und einen Unterkopfradius verbunden ist, wobei der Unterkopfradius jeweils tangential in die konische Unterkopffase und die Schaftaußenfläche übergeht, während die konische Unterkopffase mit einer Radialebene des Stanzniets einen Winkel α₁ von 20 ± 2 ° einschließt.

Bei der Herstellung einer Fügeverbindung verformt der Nietkopf elastisch die Decklage und verankert sich gleichzeitig über einen sich ausspreizenden Nietschaft im darunter liegenden Material, Sobald der Fügestempel den Nietkopf entlastet ist der Stanzniet gewissen inneren Zugspannungen ausgesetzt, da die Decklage zurück federt. Mithilfe der vorteilhaften Ausgestaltung des Nietkopfes und im Speziellen der konischen Unterkopffase im Verhältnis zur Radialebene des Stanzniets wird die Decklage beim Fügen weniger elastisch verformt und führt somit zu geringeren Zugspannungen innerhalb des Stanzniets nach Herstellen der Fügeverbindung.

Gemäß einer weiteren bevorzugten Ausführungsform vorliegender Erfindung liegt ein Verhältnis des Kopfdurchmessers D2 zu einem Schaftdurchmesser D1 im Bereich von 1,44 ≤ D2/D1 ≤ 1,54. Des Weiteren ist es erfindungsgemäß bevorzugt, dass der Kopfdurchmesser D2 = 7,75 ± 0,15 mm, der Schaftdurchmesser D1 = 5,2 ± 0,1 mm und die radiale Schaftstirnflächenbreite bₛ = 0,6 ± 0,1 mm betragen. In diesem Zusammenhang ist es ebenfalls bevorzugt, dass der Schaftendradius R2 = 3 mm beträgt. Gemäß einer weiteren bevorzugten Ausführungsform beträgt der minimale Durchmesser D3 der Schaftbohrung 2,9 ± 0,1 mm, während der Nietkopf eine axiale Höhe der Kopfaußenfläche von 0,3 ± 0,1 mm aufweist. Zusammenfassend ist es bevorzugt, den Stanzniet als Halbhohlstanzniet auszubilden, bei dem die zentrale Bohrung eine Sackbohrung ist.

Vorliegende Erfindung umfasst zudem ein Verfahren zum Herstellen einer Fügeverbindung sowie eine Fügeverbindung zwischen mindestens einem ersten und einem zweiten Bauteil. Dieses Fügeverfahren zeichnet sich dadurch aus, dass einer der oben beschriebenen Stanzniete in das erste und zweite Bauteil gesetzt wird. Dabei sind die Bauteile übereinander angeordnet, wobei das erste Bauteil eine Decklage aus hochfestem Stahl und das zweite Bauteil ein Aluminiumteil ist. Gemäß einer bevorzugten Ausgestaltung vorliegender Erfindung umfasst das zweite Bauteil eine Dicke in Fügerichtung, die mindestens das 1,5-fache, vorzugsweise mehr als das 2- bis 4-fache, einer Dicke des ersten Bauteils in Fügerichtung aufweist. Es ist des Weiteren bevorzugt, dass das zweite Bauteil aus einem Aluminiumguss- oder einem Aluminiumdruckgussmaterial besteht.

### 4. Detaillierte Beschreibung der begleitenden Zeichnung

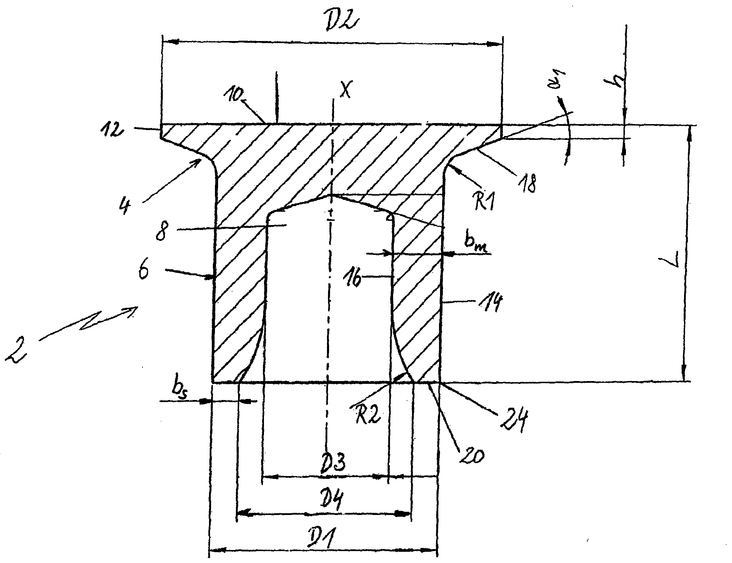

Die vorliegende Erfindung wird unter Bezugnahme auf die begleitende Zeichnung näher erläutert. Die einzige Figur zeigt eine axiale Schnittansicht einer bevorzugten Ausführungsform des erfindungsgemäßen Stanzniets im ungefügten Zustand.

### 5. Detaillierte Beschreibung der bevorzugten Ausführungsformen

Anhand der begleitenden Figur wird ein konkretes Ausführungsbeispiel eines erfindungsgemäß ausgebildeten Halbhohlstanzniets beschrieben. Der Stanzniet ist insbesondere zur Herstellung einer Fügeverbindung zwischen mindestens einem ersten Bauteil aus hochfestem Stahl als Decklage und einem weiteren Bauteil aus einem dickwandigen Aluminiumblech oder aus einem Aluminiumguss- oder einem Aluminiumdruckgussmaterial als matrizenseitiges Bauteil geeignet. Es versteht sich, dass der erfindungsgemäß bevorzugte Stanzniet auch zur Herstellung von Fügeverbindungen in anderen Materialien einsetzbar ist.

Der Stanzniet 2 ist bezüglich einer zentralen Achse X rotationssymmetrisch ausgebildet und besteht aus einem Nietkopf 4 und einem Nietschaft 6. Es ist ebenfalls bevorzugt, den Stanzniet 2 nicht rotationssymmetrisch zu seiner zentralen Achse X auszubilden. In diesem Fall weist der Stanzniet 2 quer zu seiner zentralen Achse X vorzugsweise eine elliptische oder ovale Form auf. Der Nietschaft 6 weist eine zentrale Bohrung auf, die als Sackbohrung ausgebildet ist. Der Nietkopf 4 weist eine Oberseite 10 auf, die vorzugsweise plan ausgebildet ist. Angrenzend an die Oberseite 10 wird der Nietkopf 4 durch eine Kopfaußenfläche 12 begrenzt, die vorzugsweise zylindrisch ausgebildet ist. Die Kopfaußenfläche 12 hat einen Durchmesser D2 und eine axiale Höhe h. Der sich an den Nietkopf 4 anschließende Nietschaft 6 hat eine zylindrische Schaftaußenfläche 14 und eine zylindrische Schaftinnenfläche 16. Die Schaftinnenfläche 16 begrenzt die Bohrung 8 des Stanzniets 2. Die zylindrische Schaftaußenfläche 14 hat einen Durchmesser D1 und die zylindrische Schaftinnenfläche hat einen Durchmesser D3. Erfindungsgemäß bevorzugt ist die Schaftaußenfläche 14 für bestimmte Anwendungsfälle zumindest bereichsweise geringfügig divergierend ausgebildet, um die Spaltbildung zwischen den gefügten Bauteilen zu minimieren.

Die zylindrische Kopfaußenfläche 12 ist mit der zylindrischen Schaftaußenfläche 14 über eine konische Unterkopffase 18 und einen Radius R1 verbunden. Unter dem Begriff "Radius" ist im vorliegenden Rahmen eine Ringfläche zu verstehen, die in einem Axialschnitt die Form eines Kreisbogens mit dem Radius R aufweist. Der durch den Radius R1 definierte Kreisbogen verläuft jeweils tangential in die Unterkopffase 18 sowie in die Schaftaußenfläche 14. Zudem grenzt die Unterkopffase 18 unmittelbar an die Kopfaußenfläche 12 an. Der Übergang zwischen Unterkopffase 18 und Kopfaußenfläche 12 ist ebenfalls über einen Kreisbogen mit einem bestimmten Radius oder winklig realisiert. Zudem schließt die Unterkopffase 18 bevorzugt mit einer Radialebene des Stanzniets 2 einen Winkel α₁ von 20 ± 2 °ein.

Im Bereich des Nietfußes ist die Schaftaußenfläche 14 mit der Schaftinnenfläche 16 über eine plane Schaftstirnfläche 20 und einen Kreisbogen verbunden. Der Kreisbogen wird durch einen Radius R2 definiert, der beginnend an der Schaftstirnfläche 20 tangential in die Schaftinnenfläche 16 verläuft. Die plane Schaftstirnfläche 20 verläuft vorzugsweise rechtwinklig zur Längsachse X des Stanzniets 2. Zudem geht die Schaftstirnfläche 20 über die winklig ausgebildete und radial umlaufende Schneidkante 24 in die Schaftaußenfläche 14 über. Die Schneidkante 24 ist daher vorzugsweise scharfkantig ausgebildet. Die Bohrung 8 hat im Unterkopfbereich einen gewölbten Nutgrund 26, der durch eine um die Längsachse X radial umlaufende geneigte Fläche gebildet ist. Diese Fläche ist vorzugsweise in einem Winkel von 105 ± 5 ° zur Längsachse X angeordnet. Der Übergang von dieser winklig angeordneten Ebene in die Schaftinnenfläche 16 erfolgt vorzugsweise über einen Kreisbogen.

Aufgrund des kreisbogenförmigen Übergangs von der Schaftstirnfläche 20 in die Bohrung 8 des Stanzniets 2 ist die Schaftinnenfläche 16 nicht über die vollständige axiale Länge des Nietschafts 6 zylindrisch ausgebildet. Vielmehr nimmt eine radiale Breite b des Nietschafts 6 in axialer Richtung zum Nietkopf 4 und beginnend an der Schaftstirnfläche 20 stetig zu. Die maximale Breite bₘ des Nietschafts 6 erreicht dieser im zylindrisch verlaufenden Bereich der Schaftinnenfläche 16. Die maximale radiale Breite des Nietschafts 6 ist mit bₘ bezeichnet. Die minimale radiale Breite bₛ des Nietschafts 6 liegt im Bereich der Schaftstirnfläche 20 vor. Diese minimale radiale Breite entspricht der Schaftstirnflächenbreite. Aufgrund dieser Geometrie des Nietschafts 6 weist die Bohrung 8 in ihrem zylindrischen Bereich oder angrenzend an den Nietkopf 4 den Durchmesser D3 auf. Der größte Durchmesser der Bohrung 8 wird am vom Nietkopf 4 abgewandten Ende des Nietschafts 6 erreicht. Er ist mit D4 bezeichnet.

Gemäß der bevorzugten Ausführungsform vorliegender Erfindung weist der Stanzniet 2 die folgenden Abmessungen auf:
D1 = 5,2 ± 0,1 mm
D2 = 7,75 ± 0,15 mm
D3 = 2,9 ± 0,1 mm
D4 = 4,0 mm
h = 0,3 ± 0,1 mm
L = 5,5 ± 0,15 mm
bₘ = 1,15 ± 0,1 mm
bₛ = 0,6 ± 0,1 mm
R1 = 0,5 ± 0,1 mm
R2 = 3 mm
α₁ = 20 ± 2°

Eine axiale Länge L des Stanzniets 2 beträgt im dargestellten Ausführungsbeispiel 5,5 ± 0,15 mm. Es ist ebenfalls bevorzugt, auch andere Nietlängen L von mehr oder weniger als 5 mm bei sonst gleichen Abmessungen des Stanzniets 2 einzusetzen.

Aufgrund seiner Geometrie ist der Stanzniet 2 besonders für die Verbindung einer Decklage aus hochfestem Stahl mit einer matrizenseitig angeordneten dickwandigen Aluminiumlage geeignet. Dabei ist es bevorzugt, dass zwischen der Decklage aus hochfestem Stahl und der matrizenseitigen Aluminiumlage noch andere Materiallagen angeordnet sind. Besonderes vorteilhaft hat sich der Stanzniet 2 bei der Herstellung einer Fügeverbindung aus hochfestem Stahl als Decklage und einer matrizenseitigen Lage aus einem Aluminiumgussmaterial erwiesen. In diesem Zusammenhang ist es bevorzugt, dass das Bauteil aus einem Aluminium- oder Aluminiumgussmaterial eine Dicke in Fügerichtung aufweist, die mindestens dem 1,5-fachen, vorzugsweise dem mehr als 2- bis 4-fachen, der Dicke der Decklage in Fügerichtung entspricht.

Beim Aluminiumguss wird Aluminium, bspw. in Form verschiedener Vorlegierungen, eingeschmolzen. Anschließend lassen sich durch die Zugabe verschiedener Legierungselemente Eigenschaften der Aluminiumschmelze beeinflussen. Diese Eigenschaften sind Härte, Vibrationsabsorption, Zähigkeit und Zerspanbarkeit für die mechanische Bearbeitung. Als Legierungszusätze für Motorengehäuse und Getriebegehäuse kommen vorzugsweise die Elemente: Kupfer, Silizium, Magnesium u. a. in Frage. Zum Gießen sind verschiedene Verfahren bekannt. Aufgrund eines niedrigen Schmelzpunktes können Aluminium/Aluminiumlegierungen im Druckguss verarbeitet werden, was unter anderem im Automobilbau eingesetzt wird. Hier werden beispielsweise Motorblöcke, Pumpengehäuse, Zylinderköpfe sowie Fahrwerksteile und Getriebegehäuse hergestellt.

Unter Aluminiumdruckguss versteht man ein Druckgussverfahren, bei dem Aluminium im flüssigen oder teigigen Zustand unter hohem Druck in eine vorgewärmte Form gepresst wird. Es verdrängt die in der Form vorhandene Luft und wird während des Erstarrungsvorganges unter Druck gehalten. Die Dauerform, vorzugsweise aus Stahl, ist das um das Schwindmaß vergrößerte genaue Negativ des herzustellenden Abgusses. Die Form besteht aus mindestens zwei Teilen (ggf. zusätzliche Schieber), so dass sie nach dem Füllvorgang und Erstarren des Metalls geöffnet und der Abguss aus ihr entfernt werden kann.

Die Entwicklung dieser neuen Stanznietgeometrie war erforderlich, weil mit üblichen Halbhohlstanznieten ein hohes Rissrisiko sowohl in dem verformten Aluminiumbauteil als auch in dem notwendigerweise sehr hochfesten Stanzniet erzeugt worden ist. Die erfindungsgemäß bevorzugte Stanznietgeomtrie verringert aber im Vergleich zu herkömmlichen Stanznieten die durch die Fügeverbindung erzeugten Eigenspannungen in dem Aluminiumteil. Zudem treten während des Fügevorgangs geringere Stauchkräfte innerhalb des Stanzniets 2 auf, was ebenfalls geringere Eigenspannungen, insbesondere Zugspannungen in Längsrichtung des Stanzniets 2, im gesetzten Stanzniet 2 zur Folge hat. In diesem Zusammenhang ist hervorzuheben, dass die Decklage aus hochfestem Stahl vorzugsweise eine Festigkeit im Bereich von 800 - 1.100 MPa aufweist. Natürlich ist es ebenfalls bevorzugt, Decklagen mit einer höheren oder niedrigeren Festigkeit zu verbinden. Bei höheren Festigkeiten der Decklage muss entsprechend die Festigkeit des Stanzniets erhöht werden. Es ist ebenfalls denkbar, bei geringeren Festigkeiten der Decklage als im angegebenen Bereich die Festigkeit des Stanzniets zu senken.

Gemäß einer bevorzugten Ausführungsform vorliegender Erfindung wird eine Fügeverbindung mithilfe des Stanzniets 2 zwischen einem hochfesten Stahlbauteil mit einer Stärke von 1,6 mm als obere Decklage und einem Aluminiumgussteil im T6-Zustand (d.h. lösungsgeglüht und warmausgelagert zur Erhöhung der Festigkeit) als untere Lage erzeugt. Der Stanzniet 2 wird daher bevorzugt nur in einer Festigkeitsklasse bzw. mit einer Festigkeit ausgeführt, die geringfügig höher ist als die Festigkeit der Decklage. In diesem Zusammenhang ist es ebenfalls bevorzugt, Aluminiumteile in anderen Nachbehandlungszuständen zu verarbeiten, wie bspw. T4, T5 oder T7.

Das Fügen von hochfesten Stählen als Decklage und dickeren Aluminiumgussmaterialien als Matrizenlage erfordert, dass der hochfeste Stahl der Decklage durchstanzt wird und zudem noch eine verlässliche Verbindung im Aluminiumgussmaterial erzeugt wird. Dabei muss aufgrund der Formgebung des Stanzniets 2 die Verformung und mechanische Belastung innerhalb des Stanzniets so gering gehalten werden, dass die im Stanzniet 2 gespeicherten mechanischen Spannungen nicht zu einem Versagen des Stanzniets 2 führen. Dabei wird während des Fügevorgangs der Stanzniet 2 gerade dadurch belastet, dass er den aus der hochfesten Decklage ausgestanzten Butzen im übertragenen Sinne vor sich her schiebt. Denn aufgrund der schlechten Verformbarkeit des Butzens wegen der hohen Festigkeit der Decklage kann dieser bei den bisher bekannten Nietformen und Setzverfahren nur begrenzt in das Innere der Bohrung 8 des Stanzniets 2 eindringen bzw. eingeformt werden.

Um das Durchstanzen der Decklage durch den Stanzniet 2 während des Fügevorgangs zu garantieren, wurde die Stanzfläche im Vergleich zu herkömmlichen Stanznieten so angepasst, dass das Stanzverhalten des Stanzniets 2 im Vergleich zum Stand der Technik verbessert werden konnte. Des Weiteren sorgt der kreisbogenförmige Übergang von der Schaftstirnfläche in die Bohrung 8 für ein Abgleiten der kopfabgewandten Schaftstirnseite bzw. der Schneide des Stanzniets 2 am Butzen. Dadurch wurde es ebenfalls möglich, flachere Matrizen im Vergleich zum Stand der Technik für die Fügeaufgabe zu verwenden, sodass trotz der Verformung des Nietfußes bzw. des Nietschafts 6 im Aluminiumgussmaterial ein Risiko der Rissbildung reduziert ist und ein Schließkopf mit einer geringeren Höhe ausgebildet wird.

Um zudem die nach dem Fügevorgang im Stanzniet 2 gespeicherten Zugspannungen zu verringern, wurde gezielt der Einzug der oberen Blechlage während des Fügevorgangs reduziert. Zu diesem Zweck weist die Unterkopffase 18 im Vergleich zur Radialebene des Stanzniets den Winkel α₁ von 20 ± 2 °auf. Des Weiteren wirkt sich in diesem Zusammenhang positiv auf, dass der Nietkopf 4 lediglich eine Höhe h von 0,3 ± 0,1 mm aufweist. Gerade diese Geometriegestaltung des Stanzniets 2 reduziert den Einzug der oberen Blechlage, vorzugsweise der Decklage aus hochfestem Stahl. Die daraus folgende Reduktion der im gefügten Stanzniet gespeicherten Zugspannungen wirkt sich gerade unter dynamischer Belastung der hergestellten Fügeverbindung positiv auf die Festigkeit der Fügeverbindung aus. Aufgrund der oben beschriebenen Konsequenzen der Geometrie des erfindungsgemäß bevorzugten Stanzniets 2 ist es ebenfalls bevorzugt, den Stanzniet 2 im Vergleich zum Stand der Technik mit einer geringeren Härte herzustellen. Daraus folgt der positive Nebeneffekt, dass auch das Risiko der Rissbildung innerhalb des Stanzniets 2 nach Herstellen der Fügeverbindung reduziert ist.

Aus den oben diskutierten Geometriemerkmalen des erfindungsgemäß bevorzugten Stanzniets 2 folgt somit, dass gerade die Geometrie des Nietfußes, d. h. das Zusammenwirken der Schneide 24, der Schaftstirnfläche 20 und der kreisbogenförmige Übergang in die Bohrung 8, einen effektiveren Stanzvorgang mit geringerer Verformung zur Folge hat. Die geringere Verformung resultiert daraus, dass der Niet während des Fügevorgangs einen kleineren Stanztrichter in die Decklage einzieht verglichen zu herkömmlichen Stanznieten. Aufgrund des weniger tiefen Stanztrichters kann der Nietkopf 4 flacher ausgebildet sein und damit als Senkkopf und verglichen zum Stand der Technik mit einem geringeren Übergangswinkel und mit einem geringeren Radius zwischen der konischen Unterkopffase 18 und der Schafaußenfläche 14 ausgeführt werden. Da die Decklage während des Fügevorgangs geringer in einen Stanztrichter eingezogen wird, hat sie nach Abschluss des Fügevorgangs und Entfernen des Setzstempels auch ein geringeres Bestreben, in ihre Ausgangslage zurückzufedern. Somit erzeugt der relativ flache Senkkopf des Stanzniets 2 durch die verminderte Verformung der Decklage auch eine geringe Speicherung von mechanischen Zugkräften innerhalb des gesetzten Stanzniets 2 verglichen zum Stand der Technik.

Des Weiteren bewirkt der kreisbogenförmige und damit stetige Übergang von der Schneidkante 24 und der Schaftstirnfläche 20 in das Innere der Bohrung 8 einen geringeren Widerstand des Stanzbutzens (nicht gezeigt) beim Eindringen in die Bohrung 8 während des Fügevorgangs. Dies hat ebenfalls zur Folge, dass der Stanzniet 2 während des Fügevorgangs einen geringeren Widerstand bei seinem Eindringen in die matrizenseitige Aluminium- oder Aluminiumgusslage spürt. Somit wird der Stanzniet 2 während des Fügevorgangs weniger gestaucht und erst später in seinem Schaftbereich 6 aufgeweitet.

Zudem unterstützt der kreisbogenförmige Verlauf des Übergangs von der inneren Schneidkante an der Schaftstirnfläche 20 in die Bohrung 8 das gezielte Aufspreizen des Stanzniets 2 während des Fügevorgangs. Während sich nämlich der Nietschaft 6 in seinem zylindrischen Bereich mit maximaler radialer Breite bₘ relativ wenig verformt, wird der sich in Richtung Schaftstirnfläche 20 verjüngende Bereich des Nietschafts 6 radial auswärts aufgespreizt.

Diese durch die gezielte Variation der radialen Breite des Nietschafts 6 unterstützte Verformbarkeit fördert die Bildung des Hinterschnitts in der matrizenseitigen Aluminiumlage auf eine Weise, die im Vergleich zu aus dem Stand der Technik bekannten Stanznieten zu geringeren mechanischen Eigenspannungen im Stanzniet 2 und zu einer geringeren Kerbwirkung innerhalb der hergestellten Fügeverbindung führen. Aufgrund dieser Fügeeigenschaften des erfindungsgemäß bevorzugten Stanzniets 2 ist es möglich, eine flachere Matrize als Gegenlager angrenzend an die Aluminium- oder Aluminiumgusslage zu verwenden. Dies hat zwar höhere Eigenspannungen im Stanzniet aufgrund der größeren Verformung des Nietfußes in einer flachen Matrize zur Folge, aber in der verformten Aluminiumlage werden geringere Eigenspannungen erzeugt. Das reduziert insbesondere die Rissgefahr in Alugusswerkstoffen, was gerade für Lagen bzw. Bauteilwände aus Aluminiumgussmaterial von Bedeutung ist. Denn Aluminiumgussmaterialien weisen im Allgemeinen eine höhere Rissneigung auf als gewalztes oder gezogenes Aluminiummaterial.

## Patentansprüche

1. Stanzniet (2) zur Herstellung einer Fügeverbindung zwischen mindestens zwei Bauteilen, der die folgenden Merkmale aufweist:
a. einen Nietkopf (4) und einen Nietschaft (6) mit einer zentralen Schaftbohrung (8), wobei der Nietkopf (4) eine Oberseite (10) mit einem vorgegebenen Kopfdurchmesser (D2) aufweist,
b. der Nietschaft (6) umfasst eine zylindrische Schaftaußenfläche (14) und eine die zentrale Schaftbohrung (8) begrenzende Schaftinnenfläche (16),
c. die Schaftaußenfläche (14) und die Schaftinnenfläche (16) sind an dem vom Nietkopf (4) abgewandten axialen Ende des Nietschafts (6) durch eine plane Schaftstirnfläche (20) und einen Schaftendradius (R2) verbunden, wobei der Schaftendradius (R2) tangential in die Schaftinnenfläche (16) übergeht und die plane Schaftstirnfläche (20) mit der Schaftaußenfläche (14) durch eine Schneidkante (24) verbunden ist, wobei
d. ein Verhältnis von maximaler radialer Breite bₘ des Nietschafts (6) zur radialen Schaftstirnflächenbreite bₛ im Bereich von 1,5 ≤ bₘ/bₛ ≤ 2,5 liegt, **dadurch gekennzeichnet, dass**
e. der Schaftendradius (R2) mindestens doppelt so groß ist wie die maximale radiale Breite bₘ des Nietschafts (6).

2. Stanzniet (2) gemäß Anspruch 1, **dadurch gekennzeichnet, dass** der Nietkopf (4) einen Kopfaußenrand (12) aufweist, der mit der Schaftaußenfläche (14) durch eine konische Unterkopffase (18) und einen Unterkopfradius (R1) verbunden ist, wobei der Unterkopfradius (R1) jeweils tangential in die konische Unterkopffase (18) und die Schaftaußenfläche(14) übergeht, während die konische Unterkopffase (18) mit einer Radialebene des Stanzniets (2) einen Winkel α₁ von 20 ± 2° einschließt.

3. Stanzniet (2) gemäß einem der vorhergehenden Ansprüche **dadurch gekennzeichnet, dass** ein Verhältnis des Kopfdurchmessers (D2) zu einem Schaftdurchmesser (D1) im Bereich von 1,44 ≤ D2/D1 ≤1,54 liegt.

4. Stanzniet (2) nach einem der vorhergehenden Ansprüche, **dadurch gekennzeichnet, dass** der Kopfdurchmesser (D2) 7,75 ± 0,15 mm, der Schaftdurchmesser (D1) 5,2 ± 0,1 mm und die radiale Schaftstirnflächenbreite (bₛ) 0,6 ± 0,1 mm betragen.

5. Stanzniet (2) gemäß einem der vorhergehenden Ansprüche, **dadurch gekennzeichnet, dass** der Schaftendradius (R2) 3 ± 0,1 mm beträgt.

6. Stanzniet (2) nach einem der vorhergehenden Ansprüche, **dadurch gekennzeichnet, dass** der minimale Durchmesser (D3) der Schaftbohrung (8) 2,9 ± 0,1 mm beträgt.

7. Stanzniet (2) nach einem der vorhergehenden Ansprüche, **dadurch gekennzeichnet, dass** der Nietkopf (4) eine axiale Höhe (h) der Kopfaußenfläche (12) von 0,3 ± 0,1 mm aufweist.

8. Stanzniet (2) gemäß einem der vorhergehenden Ansprüche, **dadurch gekennzeichnet, dass** er als Halbhohlstanzniet ausgebildet ist, bei dem die zentrale Bohrung (8) eine Sackbohrung ist.

9. Verfahren zum Herstellen einer Fügeverbindung zwischen mindestens einem ersten und einem zweiten Bauteil, **gekennzeichnet durch** die folgenden Schritte:
Setzen eines Stanzniets (2) gemäß einem der vorhergehenden Ansprüche in das erste und zweite Bauteil, die übereinander angeordnet sind, wobei das erste Bauteil eine Decklage aus hochfestem Stahl und das zweite Bauteil ein Aluminiumteil ist.

10. Verfahren gemäß Anspruch 9, in dem das zweite Bauteil eine Dicke in Fügerichtung aufweist, die mindestens das 1,5-fache, vorzugsweise mehr als das 2- bis 4-fache, einer Dicke des ersten Bauteils in Fügerichtung aufweist.

11. Verfahren gemäß Anspruch 9 oder 10, wobei das zweite Bauteil aus einem Aluminiumguss- oder einem Aluminiumdruckgussmaterial besteht.

12. Fügeverbindung bestehend aus mindestens einem ersten Bauteil und einem zweiten Bauteil, wobei das erste Bauteil eine Decklage aus hochfestem Stahl und das zweite Bauteil ein Aluminiumteil ist, die mit Hilfe eines Stanzniets (2) gemäß einem der vorhergehenden Ansprüche 1 bis 8 miteinander verbunden sind.

13. Fügeverbindung gemäß Anspruch 12, in der das zweite Bauteil eine Dicke in Fügerichtung aufweist, die mindestens das 1,5-fache, vorzugsweise mehr als das 2- bis 4-fache, einer Dicke des ersten Bauteils in Fügerichtung aufweist.

14. Fügeverbindung gemäß Anspruch 12 oder 13, wobei das zweite Bauteil aus einem Aluminiumguss- oder einem Aluminiumdruckgussmaterial besteht.

## Claims

1. Self-piercing rivet (2) for producing a joining connection between at least two components, having the following features:
a. a rivet head (4) and a rivet shank (6) having a central shank bore (8), wherein the rivet head (4) has an upper side (10) having a predetermined head diameter (D2),
b. the rivet shank (6) comprises a cylindrical shank outer surface (14) and a shank inner surface (16) limiting the central shank bore (8),
c. the shank outer surface (14) and the shank inner surface (16) are connected at the axial end of the rivet shank (6) facing away from the rivet head (4) by a flat shank end face (20) and a shank end radius (R2), wherein the shank end radius (R2) transitions tangentially into the shank inner surface (16) and the plane shank end face (20) is connected to the shank outer surface (14) by a cutting edge (24), wherein
d. a ratio of maximum radial width bₘ of the rivet shank (6) to the radial shank end surface width bₛ is in the range of 1.5 ≤ bₘ/bₛ ≤ 2.5, **characterized in that**
e. the shank end radius (R2) is at least twice as great as the maximum radial width bₘ of the rivet shank (6).

2. Self-piercing rivet (2) according to claim 1, **characterized in that** the rivet head (4) comprises a head outer edge (12) connected to the shank outer surface (14) by a conical under-head chamfer (18) and by an under-head radius (R1), wherein the under-head radius (R1) transitions respectively tangentially into the conical under-head chamfer (18) and the shank outer surface (14), while the conical under-head chamfer (18) encloses with a radial plane of the self-piercing rivet (2) an angle α₁ of 20 ± 2°.

3. Self-piercing rivet (2) according to one of the preceding claims, **characterized in that** a ratio of the head diameter (D2) to a shank diameter (D1) is in the range of 1.44 ≤ D2/D1 ≤ 1.54.

4. Self-piercing rivet (2) according to one of the preceding claims, **characterized in that** the head diameter (D2) is 7.75 ± 0.15 mm, the shank diameter (Dl) is 5.2 ± 0.1 mm, and the radial shank end face width (bₛ) is 0.6 ± 0.1 mm.

5. Self-piercing rivet (2) according to one of the preceding claims, **characterized in that** the shank end radius (R2) is 3 ± 0.1 mm.

6. Self-piercing rivet (2) according to one of the preceding claims, **characterized in that** the minimum diameter (D3) of the shank bore (8) is 2.9 ± 0.1 mm.

7. Self-piercing rivet (2) according to one of the preceding claims, **characterized in that** the rivet head (4) has an axial height (h) of the head outer surface (12) of 0.3 ± 0.1 mm.

8. Self-piercing rivet (2) according to one of the preceding claims, **characterized in that** it is constructed as semi-hollow self-piercing rivet, in which the central bore (8) is a blind bore.

9. Method for producing a joining connection between at least a first and a second component, **characterized by** the following steps:
setting a self-piercing rivet (2) according to one of the preceding claims into the first and the second component, which are arranged one above the other, wherein the first component is a top layer made of high strength steel and the second component is an aluminum part.

10. Method according to claim 9, in which the second component has a thickness in the joining direction which is at least 1.5-times, preferably more than 2 to 4 times, a thickness of the first component in the joining direction.

11. Method according to claim 9 or 10, in which the second component consists of a cast aluminum or a die-cast aluminum material.

12. Joining connection consisting of at least a first component and a second component, wherein the first component is a top layer made of high strength steel and the second component is an aluminum part, which are connected to each other by means of a self-piercing rivet (2) according to one of the preceding claims 1 to 8.

13. Joining connection according to claim 12, in which the second component has a thickness in the joining direction which is at least 1.5-times, preferably more than 2 to 4 times, a thickness of the first component in the joining direction.

14. Joining connection according to claim 12 or 13, wherein the second component consists of a cast aluminum or a die-cast aluminum material.

## Revendications

1. Rivet auto-perceur (2) pour la fabrication d'un assemblage de jonction entre au moins deux composants, présentant les caractéristiques suivantes :
a. une tête de rivet (4) et une tige de rivet (6) comprenant un alésage de tige central (8), la tête de rivet (4) présentant une face supérieure (10) avec un diamètre de tête prédéfini (D2),
b. la tige de rivet (6) comporte une surface extérieure de tige cylindrique (14) et une surface intérieure de tige (16) délimitant l'alésage de tige central (8),
c. la surface extérieure de tige (14) et la surface intérieure de tige (16) sont reliées par le biais d'une surface frontale de tige plane (20) et d'un rayon d'extrémité de tige (R2) au niveau de l'extrémité de la tige de rivet (6) axialement opposée à la tête de rivet (4), dans lequel le rayon d'extrémité de tige (R2) prolonge tangentiellement la surface intérieure de tige (16) et la surface frontale de tige plane (20) est reliée à la surface extérieure de tige (14) par le biais d'une arête de coupe (24), dans lequel
d. un rapport de la largeur radiale maximale bₘ de la tige de rivet (6) à la largeur radiale de la surface frontale de tige bₛ est compris dans la plage de 1,5 ≤ bₘ/bₛ ≤ 2,5, **caractérisé en ce que**
e. le rayon d'extrémité de tige (R2) est au moins deux fois supérieur à la largeur radiale maximale bₘ de la tige de rivet (6).

2. Rivet auto-perceur (2) selon la revendication 1, **caractérisé en ce que** la tête de rivet (4) présente un bord extérieur de tête (12), lequel est relié à la surface extérieure de tige (14) par le biais d'un chanfrein de sous-tête conique (18) et d'un rayon de sous-tête (R1), dans lequel le rayon de sous-tête (R1) prolonge respectivement tangentiellement le chanfrein de sous-tête conique (18) et la surface extérieure de tige (14), tandis que le chanfrein de sous-tête conique (18) inclut un angle α1 de 20 ± 2° avec un plan radial du rivet auto-perceur (2).

3. Rivet auto-perceur (2) selon l'une des revendications précédentes, **caractérisé en ce qu'**un rapport du diamètre de tête (D2) à un diamètre de tige (D1) est compris dans la plage de 1,44 ≤ D2/D1 ≤ 1,54.

4. Rivet auto-perceur (2) selon l'une des revendications précédentes, **caractérisé en ce que** le diamètre de tête (D2) mesure 7,75 ± 0,15 mm, le diamètre de tige (D1) mesure 5,2 ± 0,1 mm et la largeur radiale de la surface frontale de tige (bₛ) mesure 0,6 ± 0, 1 mm.

5. Rivet auto-perceur (2) selon l'une des revendications précédentes, **caractérisé en ce que** le rayon d'extrémité de tige (R2) mesure 3 ± 0,1 mm.

6. Rivet auto-perceur (2) selon l'une des revendications précédentes, **caractérisé en ce que** le diamètre minimal (D3) de l'alésage de tige (8) mesure 2,9 ± 0,1 mm.

7. Rivet auto-perceur (2) selon l'une des revendications précédentes, **caractérisé en ce que** la tête de rivet (4) présente une hauteur axiale (h) de la surface extérieure de tête (12) de 0,3 ± 0, 1 mm.

8. Rivet auto-perceur (2) selon l'une des revendications précédentes, **caractérisé en ce que** celui-ci est conçu comme un rivet auto-perceur semi-creux, dans lequel l'alésage central (8) est un alésage borgne.

9. Procédé pour la fabrication d'un assemblage par jonction entre au moins un premier et un deuxième composant, **caractérisé par** les étapes suivantes :
- pose d'un rivet auto-perceur (2) selon l'une des revendications précédentes dans le premier et le deuxième composant, lesquels sont disposés l'un sur l'autre, le premier composant étant une couche de couverture en acier à haute résistance et le deuxième composant est une pièce en aluminium.

10. Procédé selon la revendication 9, dans lequel le deuxième composant présente une épaisseur dans la direction de jonction, laquelle correspond à 1,5 fois, de préférence à plus de 2 à 4 fois une épaisseur du premier composant dans la direction de jonction.

11. Procédé selon la revendication 9 ou 10, dans lequel le deuxième composant est constitué d'un matériau à base d'aluminium moulé ou d'aluminium moulé sous pression.

12. Assemblage par jonction constitué d'au moins un premier composant et un deuxième composant, dans lequel le premier composant est une couche de couverture en acier à haute résistance et le deuxième composant est une pièce en aluminium, lesquelles sont reliées entre elles à l'aide d'un rivet auto-perceur (2) selon l'une des revendications précédentes 1 à 8.

13. Assemblage par jonction selon la revendication 12, dans lequel le deuxième composant présente une épaisseur dans la direction de jonction, laquelle correspond à 1,5 fois, de préférence à plus de 2 à 4 fois une épaisseur du premier composant dans la direction de jonction.

14. Assemblage par jonction selon la revendication 12 ou 13, dans lequel le deuxième composant est constitué d'un matériau à base d'aluminium moulé ou d'aluminium moulé sous pression.
